# EUROPEAN PATENT APPLICATION

(11) **EP 1 614 909 A2**
(43) Date of publication of application: **11.01.2006**
(21) Application number: 04386024.6
(22) Date of filing: 21.09.2004
(51) Int. Cl.: F16B 2/06, F21V 21/116

(54) **Fastening method for objects and lights with plasticised metallic accessories and bolts**

(30) Priority: 07.07.2004 GR 2004100285
(71) Applicant: Palaiohorinos, Ioannis, TK 570 22 Thessaloniki (GR)
(72) Inventor: Palaiohorinos, Ioannis, TK 570 22 Thessaloniki (GR)

(57) **Abstract**

It is about a fastening method applied with a plastic base (1) through which the metallic plates pass (7) tightening the arms of subjects or lights (6) with plasticized accessories (2). The plasticized accessory is drawn in the base (1) ensuring more stability and insulation for the installation.

## Description

This method concerns the fastening of subjects and lights on walls or columns or other surfaces. Till nowadays, the used fastening methods had no plasticization of the used accessories. The result was that at their use for fastening electrical devices-lights, not only the danger of leakage was present but also there was danger of electric shock of pedestrians.

For this reason my method uses automatically plasticized or totally plastic accessories and bolts (base).

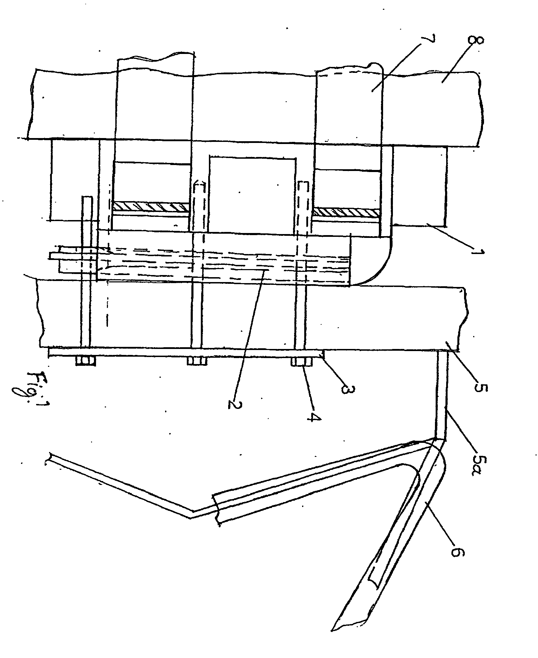

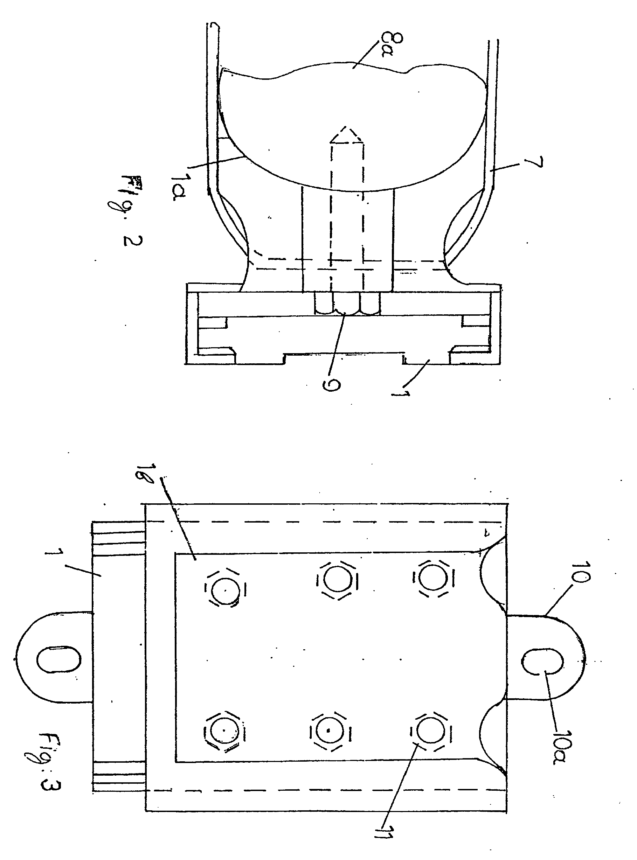

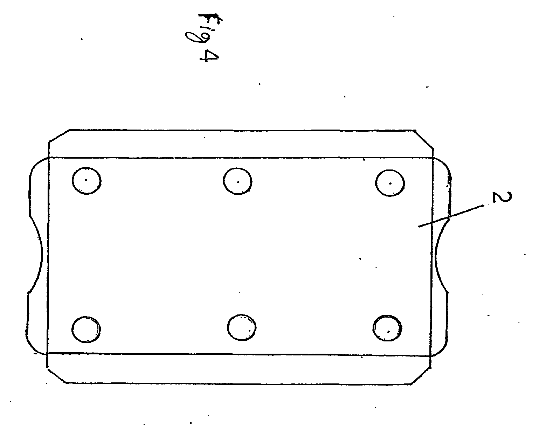

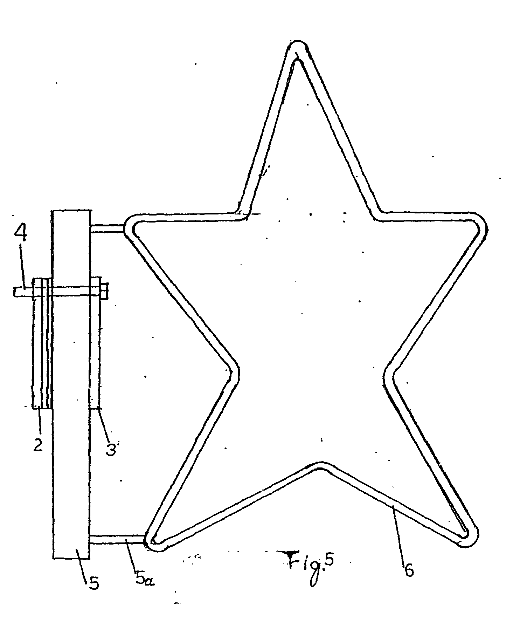

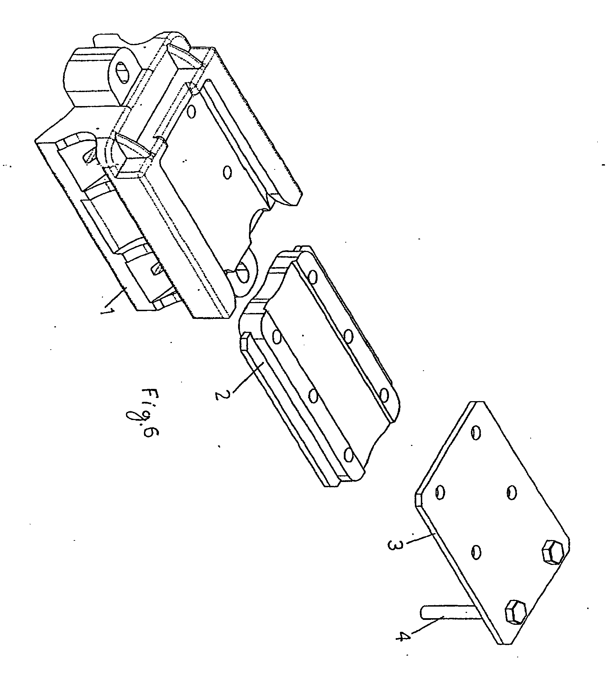

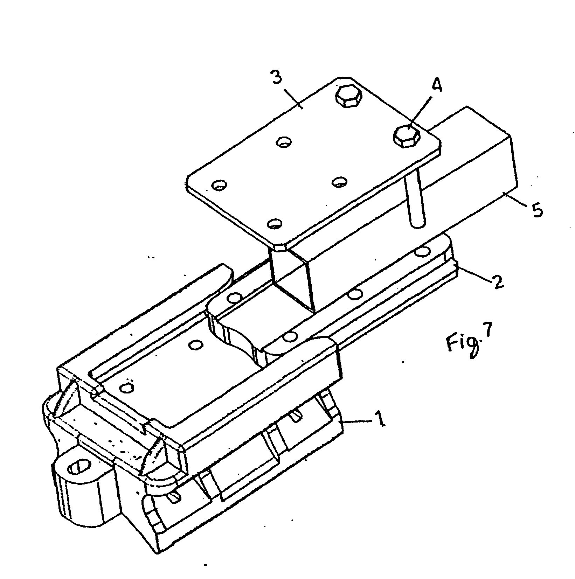

Thus, with my method the following points are certified:
A strong base with internal metal and external plastic, so that the base itself is insulator of the light and the column. So, even in case of leakage there is no danger. In this patent a fastening method of subjects and lights is presented, which is succeeded by the following way:
   The first work on the fastening of light is done on ground using two plates -one plasticized with plasticized bolts. Screwing the plates the arm of light is tightened (fig.5).
   Then, using the drawing method for the main part of base (fig.7) which is fastened with plates (lag) to column (fig. 1) either it is screwed to wall or wood column (fig.2).

### ADVANTAGES

Till today the user should keep the light and, at the same time to screw it and fasten it on the column and in a height. Therefore, the help of a second man was necessary.

On the contrary, with my base we draw the light and being calm we screw the rest 4 bolts, which fasten the light or the subject to the main base and the column.

An application is referred in the attached figures:
In figure 1 we see the fastening method in application with the tightening of a light to a column.
In figure 2 the top view of the installation of a main base to a wood column is presented.
In figure 3 the front view of a plastic main base is noticed.
Figure 4 is referred to the front view of a plasticized accessory which draws the base.
In figure 5 we see the front view of first fastening of the light on the ground.
In figure 6 the perspective of the main used accessories in this fastening method is presented.
Figure 7 concerns the fastening phase of the light arm to the plates on the base in perspective.

Concerning the figures:
The fastening method of subjects and lights is applied with the following accessories:
   A plastic base (1) with plasticized screw nuts (11). In the front surface (1b) there is a drawer application and the back is curvy formatted (1a) to embrace the columns. Through the base the metallic plates (lag) (7) are passed which fasten the base to the columns (8).

The fastening to the walls or wood columns (8a) with its extensions (10) is succeeded through the holes (10a) and their screwing (9) to these surfaces.

The subject or light (6) fastened to the main arm (5) by holders (5a) is tightened with the accessories (3) and the plasticized accessory (2) which is drawn to the base (1).

## Claims

1. A fastening method of subjects and lights with drawing and plasticization of metallic accessories and bolts **characterized by** the usage of the following accessories:
A plastic base (1) with plasticized screw nuts (11). In the front surface (1b) there is a drawer application and the back is curvy formatted (1a) to embrace the columns. Through the base the metallic plates (lag) (7) are passed which fasten the base to the columns (8). The fastening to the walls or wood columns (8a) with its extensions (10) is succeeded through the holes (10a) and their screwing (9) to these surfaces.
The subject or light (6) fastened to the main arm (5) by supportings (5a) is tightened with the accessories (3) and the plasticized accessory (2) which is drawn to the base (1).
